(19) Europäisches Patentamt / European Patent Office / Office européen des brevets

(11) **EP 2 351 988 B1**

(12) **FASCICULE DE BREVET EUROPEEN**

(45) Date de publication et mention
de la délivrance du brevet:
**02.01.2013   Bulletin 2013/01**

(51) Int Cl.:
***G01C 21/16*** *(2006.01)*

(21) Numéro de dépôt: **11000017.1**

(22) Date de dépôt: **04.01.2011**

(54) **Estimation stabilisée en virage des angles d'assiettes d'un aéronef**

Stabilisierte Schätzung im Kurvenflug der Neigungswinkel eines Luftfahrzeugs

Stabilised estimation of the pitch angles of an aircraft during turns

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2010  FR 1000380**

(43) Date de publication de la demande:
**03.08.2011   Bulletin 2011/31**

(73) Titulaire: **EUROCOPTER**
**13725 Marignane Cédex (FR)**

(72) Inventeur: **Petillon, Jean Paul**
**13140 Miramas (FR)**

(74) Mandataire: **Pouillot, Laurent Pierre Paul**
**GPI & Associés**
**1330, rue Guillibert de la Lauzière**
**EuroParc de Pichaury, Bât B2.9 - 1er Et.**
**13856 Aix-en-Provence Cedex 3 (FR)**

(56) Documents cités:
**FR-A1- 2 614 694     FR-A1- 2 898 196**

**Description**

Le domaine général de la présente invention est celui des aides au pilotage des aéronefs.

En particulier, la présente invention s'applique à la mesure des assiettes d'un tel aéronef. Typiquement, elle s'applique à des centrales d'assiettes. Ces mesures sont principalement utilisées pour des affichages destinés au pilote de l'aéronef (via les Piloting Flight Display ou PFD ou autres Flight Display System ou FDS), ainsi que le système de pilote automatique (Automatic Flight Control System ou AFCS).

Parmi les centrales d'assiettes concernées, la présente invention est par exemple applicable aux systèmes appelés « AHRS » pour « Attitude and Heading Reference Systems », ou encore aux instruments de secours (Integrated Electronic Standby Instrument IESI).

Un exemple de système de mesure des assiettes et cap est décrit dans le document FR 2 614 694, dont la teneur correspond au préambule de la revendication 1.

Ce document FR 2 614 694 décrit une centrale avec trois ensembles de détection fournissant respectivement les composantes gyrométriques, accélérométriques et magnétométriques dans un trièdre lié à un aérodyne. Des moyens de calcul élaborent à partir des informations gyrométriques, une matrice de projection de ces composantes dans le trièdre géographique local.

D'autres moyens permettent de projeter les composantes magnétométriques dans le trièdre géographique local à l'aide de ladite matrice, puis de déterminer l'erreur de cap dans le trièdre long-travers.

Par ailleurs, des moyens élaborent des corrections des mesures gyrométriques dans le trièdre lié à l'aérodyne à partir desdites erreurs d'assiette et de cap.

Dans les systèmes de mesure des assiettes et du cap selon le document FR 2 614 694, l'estimation du biais de gyromètre, c'est-à-dire l'écart entre une valeur vraie d'une variable gyrométrique et la valeur mesurée, est gelée chaque fois que l'aéronef est en virage, par exemple au-delà de 0,6 degrés par seconde (°/s).

Ce gel de l'estimation du biais de gyromètre vise à éviter l'instabilité du filtre d'assiette qui résulte d'un virage, et qui provoquerai la divergence des estimations d'assiette.

L'inconvénient de cette approche est que les variations du biais de la mesure gyrométrique postérieures au gel ne sont plus compensées. Ceci n'a en général que peu de conséquence lorsque les gyromètres sont de classe tactique, comme par exemple dans le cas de gyromètres à fibre optique (en anglais « Fiber Optical Gyrometer » ou FOG) dont la précision est classiquement de l'ordre de un degré par heure (1°/h).

Par contre, si les gyromètres d'une centrale d'assiettes présentent des performances moindres, ceci peut entraîner des erreurs significatives sur les estimations des assiettes et du cap par ladite centrale d'assiettes.

C'est par exemple le cas, si le biais des gyromètres est de l'ordre de plusieurs dizaines de degrés par heure, comme avec les gyromètres vibrants. Des gyromètres vibrants prenant la forme de microstructures électromécaniques (en anglais « Micro Electro Mechanical System » ou MEMS) sont actuellement disponibles. De tels gyromètres MEMS, qui peuvent être manufacturés selon des procédés proches de ceux des circuits intégrés, sont d'un coût réduit.

Une approche du problème rencontré prévoit une hybridation entre les données issues d'un système de positionnement tel qu'un système de positionnement global (GPS ou Galileo) ou analogues, avec celles issues d'une IMU (Inertial Measurement Unit) pour constituer un système de navigation inertielle (INS pour l'anglais « Inertial Navigation System »).

Le document FR 2 898 196 décrit une telle approche, tout comme le document « Reconstitution de l'état d'un micro drone par fusion de données » par Joan Solà Ortega, disponible à : http://homepages.laas.fr/jsola/JoanSola/objectes/altres/DEA/Rappo rtDEA.doc.

Suivant ces documents, est proposé un filtre global (assiettes / cap, vitesse, position / altitude). Les filtres d'assiettes, cap et vertical ne sont pas séparables en sous-filtres, ce qui s'oppose à une décomposition indispensable à la démonstration de stabilité requise par exemple pour une certification de haut niveau de sécurité dite « safety critical » (c'est-à-dire critique relativement à la sécurité de vol). Également, on traite les trois angles d'Euler (cf. infra) sous la forme complexe d'un quaternion à variable Q de dimension quatre (4). Enfin, le biais des capteurs, notamment des gyromètres, est exprimé en repère porteur, ce qui en complique la formulation.

Par ailleurs, il est actuellement exclu d'introduire dans une centrale d'assiettes des gyromètres dont le biais ou erreur d'estimée est de l'ordre de plusieurs dizaines de degrés par heure. A fortiori, ceci est exclu si l'on vise une certification de haut niveau. Or, des gyromètres vibrants à bas coût existent, sous la forme de microstructures électromécaniques (en anglais « Micro Electro Mechanical Systems » ou MEMS). Avec les techniques actuelles, ces gyromètres MEMS ont des biais trop élevés pour être introduits dans une centrale d'assiette.

L'invention est définie par les revendications et vise par exemple à résoudre ces inconvénients. Elle vise notamment à :

- faciliter l'introduction des gyromètres MEMS dans les AHRS ;

- préserver l'estimation des biais des gyromètres pendant les phases de virage ;

- assurer la séparabilité en sous filtres d'assiettes, de cap et de verticale, et ainsi la simplicité et donc la démontrabilité de la stabilité par exemple pour une certification.

L'invention permet de cette manière la réalisation d'un équipement d'aide au pilotage d'aéronef, qui est à la fois bas coût et « safety critical ».

A cet effet, une réalisation de l'invention est un procédé d'estimation des angles d'assiettes d'un aéronef.

Selon ce procédé :

- Ladite estimation des angles d'assiettes, ainsi qu'une estimation d'un angle de cap et une estimation d'un vecteur vitesse linéaire exprimées en axes géographiques, sont générées par intégration algorithmique de mesures issues d'une unité de mesures inertielles à composants liés, lesdites mesures étant indicatives d'une vitesse angulaire et d'une accélération linéaire dudit aéronef ;
- Ladite intégration algorithmique a en outre des entrées de correction desdites mesures inertielles, exprimées en axes géographiques par deux composantes horizontales et une composante verticale et permettant des corrections : d'accélération angulaire, de vitesse angulaire et d'accélération linéaire ;

- Un écart de vitesse linéaire exprimé en axes géographiques est formé en retranchant l'estimation de vitesse linéaire générée par ladite intégration algorithmique à une mesure de la vitesse linéaire de l'aéronef issue d'un capteur de vitesse linéaire et exprimée en axes géographiques également ;
- Une estimation d'un taux de virage de l'aéronef est formée par estimation (projection et / ou dérivation) de la mesure de vitesse angulaire sur un axe géographique vertical, suivant un opérateur de projection qui est fonction desdits angles d'assiette ;
- Chacune des deux composantes horizontales desdites corrections d'accélération angulaire, de vitesse angulaire et d'accélération linéaire est une combinaison linéaire des deux composantes horizontales, à savoir celle qui est parallèle à la correction et l'autre composante horizontale non colinéaire - le plus souvent perpendiculaire - à ladite correction, dudit écart de vitesse ; d'où résulte l'obtention de coefficients croisés entre lesdits axes horizontaux ; et
- Chacun des coefficients de ladite combinaison linéaire est une fonction continue du temps et est dépendant de ladite estimation du taux de virage ; de sorte que le filtre d'assiette est indépendant vis-à-vis des filtres de cap et de verticale, permettant que les estimations des angles d'assiettes sont stables y compris lors des virages de l'aéronef.

Selon une réalisation, lesdits coefficients de la combinaison linéaire sont les termes d'une matrice K(t) représentant la solution de l'équation différentielle à temps continu, dite « de Riccati », suivante :

$$\frac{d\mathrm{P}}{dt} = \mathrm{FP} + \mathrm{PF}^{\mathrm{T}} + \mathrm{Q} - \mathrm{PH}^{\mathrm{T}}\mathrm{R}^{-1}\mathrm{HP}$$

$$\mathrm{K} = \mathrm{PH}^{\mathrm{T}}\mathrm{R}^{-1}$$

Où : t est la variable temps, P est la matrice de covariance du bruit d'état; Q est la matrice de densité spectrale de puissance des bruits affectant lesdites mesures inertielles, R est la matrice de densité spectrale de puissance affectant ladite mesure de vitesse linéaire, H est la matrice de projection du vecteur d'état sur un sous-espace d'observation, et F est la matrice d'évolution du système linéaire décrivant la dynamique de propagation des composantes horizontales des corrections dans ladite intégration algorithmique :

$$\begin{pmatrix} \dot{\vec{\delta}} \\ \dot{\vec{\imath}} \\ \dot{\vec{v}} \end{pmatrix} = \begin{pmatrix} \Omega & 0 & 0 \\ 1 & 0 & 0 \\ 0 & G & 0 \end{pmatrix} \begin{pmatrix} \vec{\delta} \\ \vec{\imath} \\ \vec{v} \end{pmatrix} + \begin{pmatrix} \vec{\rho} \\ \vec{\omega} \\ \vec{\gamma} \end{pmatrix}, \text{ avec } \quad F(t) = \begin{pmatrix} \Omega & 0 & 0 \\ 1 & 0 & 0 \\ 0 & G & 0 \end{pmatrix}$$

$$(\vec{v}) = \begin{pmatrix} 0 & 0 & 1 \end{pmatrix} \begin{pmatrix} \vec{\delta} \\ \vec{\imath} \\ \vec{v} \end{pmatrix} \qquad H = \begin{pmatrix} 0 & 0 & 1 \end{pmatrix}$$

Où :

- $(\vec{\delta}\ \vec{\imath}\ \vec{v})^{\mathsf{T}}$ est un vecteur d'état, constitué des paires de composantes horizontales :

  i) du biais $(\vec{\delta})$ affectant ladite mesure de vitesse angulaire,
  ii) d'angles d'inclinaison $(\vec{\imath})$ d'un plan horizontal défini par les angles d'assiette estimés par l'intégration algorithmique, et
  iii) du biais $(\vec{v})$ affectant ladite estimation de vitesse ;

- $(\vec{\rho}\ \vec{\omega}\ \vec{\gamma})^{\gamma}$ est un vecteur de commande, constitué des paires de composantes horizontales desdites corrections des mesures inertielles, à savoir :

  i) la correction d'accélération angulaire $\vec{\rho}$ ;
  ii) la correction de vitesse angulaire $\vec{\omega}$, et
  iii) la correction d'accélération linéaire $\vec{\gamma}$

- $\cdot\, \Omega = \begin{pmatrix} 0 & -\dot{\psi} \\ \dot{\psi} & 0 \end{pmatrix}$ est une matrice 2 x 2 définie par ledit taux de virage $\dot{\psi}$ ; et

- $\cdot\, G = \begin{pmatrix} 0 & g \\ -g & 0 \end{pmatrix}$ est une matrice 2 x 2 définie par le module g de la gravité locale.

Selon une mise en oeuvre, ladite équation de Riccati est résolue dans une forme approchée dite « à temps discret ».

Dans une mise en pratique, ladite mesure de vitesse linéaire est issue d'un capteur qui s'exprime relativement à des axes liés à l'aéronef, cette mesure étant obtenue par projection à l'aide dudit opérateur de projection, desdits axes de l'aéronef vers lesdits axes géographiques.

Selon diverses réalisations, ledit capteur comporte au moins un anémomètre à tube de Pitot et/ou un capteur radar Doppler et/ou un système d'anémométrie vectorielle calculée par moyens internes (par exemple VIMI) ou analogues.

Dans une autre mise en pratique, ladite mesure de vitesse linéaire est directement issue d'un capteur qui s'exprime relativement aux axes géographiques ; ledit capteur étant un système de positionnement global (GPS ou Galileo) ou analogues.

Selon une réalisation du procédé, on effectue en outre des corrections verticales de vitesse angulaire et d'accélération angulaire. Ces corrections sont calculées par un filtre de cap exploitant des mesures issues d'un magnétomètre solidaire de l'aéronef.

Dans une mise en oeuvre, on effectue en outre une correction verticale d'accélération linéaire, ladite correction étant calculée par un filtre dit « de verticale » exploitant des mesures issues d'un capteur mesurant une altitude et/ou une vitesse verticale de l'aéronef ; ledit capteur étant un système de positionnement global (GPS, Galileo ou analogues) et/ou un capteur de pression et/ou analogues.

Une autre réalisation de l'invention est un dispositif d'estimation des angles d'assiettes d'un aéronef.

Selon cette réalisation, ce dispositif comporte :

- Une plateforme virtuelle traitant les données issues d'une unité de mesures inertielles à composants liés, pour générer des estimations des angles d'assiettes, ainsi que d'un angle de cap et d'une vitesse linéaire ; ladite plateforme ayant des moyens d'intégration algorithmique de mesures inertielles indicatives d'une vitesse angulaire et d'une accélération linéaire dudit aéronef ; l'estimation de vitesse linéaire étant exprimée par deux composantes horizontales et une composante verticale en projection sur des axes géographiques ;

- Des ports d'entrées vers ladite plateforme virtuelle pour que celle-ci (i.e. la plateforme) applique des corrections, exprimées en axes géographiques, aux mesures inertielles, lesdites corrections consistant en des termes : d'accélération angulaire appliqués via un (premier) port ; de vitesse angulaire appliqués via un (second) port ; et d'accélération linéaire appliqués via un (troisième) port ;

- Des moyens de soustraction reliés à un capteur de vitesse linéaire, agencés pour former un vecteur d'écart de vitesse, exprimé en axes géographiques, en retranchant l'estimation de vitesse linéaire générée par ladite plateforme virtuelle à une mesure de la vitesse de l'aéronef issue dudit capteur ;
- Des moyens de projection, pour former une estimation de taux de virage par projection de la mesure de vitesse angulaire sur un axe vertical, suivant un opérateur de projection qui est calculé à partir des angles d'assiette ; et
- Des moyens de combinaison linéaire, agencés de manière que chacune des deux composantes horizontales desdites corrections d'accélération angulaire, de vitesse angulaire et d'accélération linéaire soit une combinaison linéaire des deux composantes horizontales, celle parallèle à ladite correction et celle perpendiculaire ; i.e. non colinéaire, à ladite correction, dudit écart de vitesse ; les coefficients desdites combinaisons linéaires étant des fonctions continues du temps et étant dépendants de ladite estimation du taux de virage.

Dans une réalisation du dispositif, celui-ci met en oeuvre le procédé évoqué plus haut.

Dans une réalisation, ce dispositif est une centrale d'assiettes d'un instrument de secours (ou analogues), lesdits ports d'entrées de corrections angulaires de la plateforme virtuelle recevant une contribution nulle sur l'axe vertical.

Selon un mode de réalisation, le dispositif est en outre relié à un magnétomètre solidaire de l'aéronef ainsi qu'à un capteur d'altitude ou de vitesse verticale ; ce dispositif étant une centrale d'assiettes et de cap (AHRS ou analogues) ayant des filtres de cap et de verticale.

Par exemple, lesdits ports d'entrées de correction reçoivent des termes verticaux de correction d'accélération et de vitesse angulaire des gyromètres liés au dispositif en tant que contribution dudit filtre de cap, ainsi qu'une correction verticale d'accélération linéaire en tant que contribution dudit filtre de verticale.

Encore une réalisation de l'invention est un aéronef.

Cet aéronef emploie, dans un mode de réalisation, une estimation d'angles d'assiettes obtenue suivant le procédé évoqué précédemment.

Dans une mise en oeuvre, l'aéronef comprend une centrale d'assiette formant le dispositif tel qu'évoqué plus haut.

L' unité de mesures inertielles comporte au moins un gyromètre à structure vibrante de type MEMS.

On verra aussi que l'invention s'attache à décomposer les traitements en sous filtres, dont l'indépendance est démontrée, et dont la simplicité permet la démonstration mathématique de la stabilité. Ceci permet d'obtenir une estimation d'assiette conforme à l'invention, qui soit de fonctionnement sûr, par exemple jusqu'au niveau dit « safety critical ».

On comprend que grâce à l'invention, la poursuite des biais est permanente, contrairement à l'art antérieur où on l'interrompait pendant tout virage dépassant une certaine valeur du taux de virage (par exemple 0,6 °/s comme dans le document FR 2 614 694).

On comprend aussi que l'invention préserve la simplicité du filtre d'assiette qui ne se trouve pas intriqué avec celui de cap et celui de vitesse verticale, de telle manière qu'il devient possible d'en obtenir une certification de niveau « safety critical ».

L'invention et ses avantages apparaissent plus en détail dans la description qui suit, d'exemples de réalisation donnés à titre illustratif, en référence aux figures annexées.

- la figure 1 est une vue schématique illustrant des équipements de bord d'un aéronef selon l'invention, avec une centrale d'assiette pourvue d'une plate-forme virtuelle de calcul apte à fournir des informations à un pilote automatique ainsi qu'à un affichage de l'aéronef ;

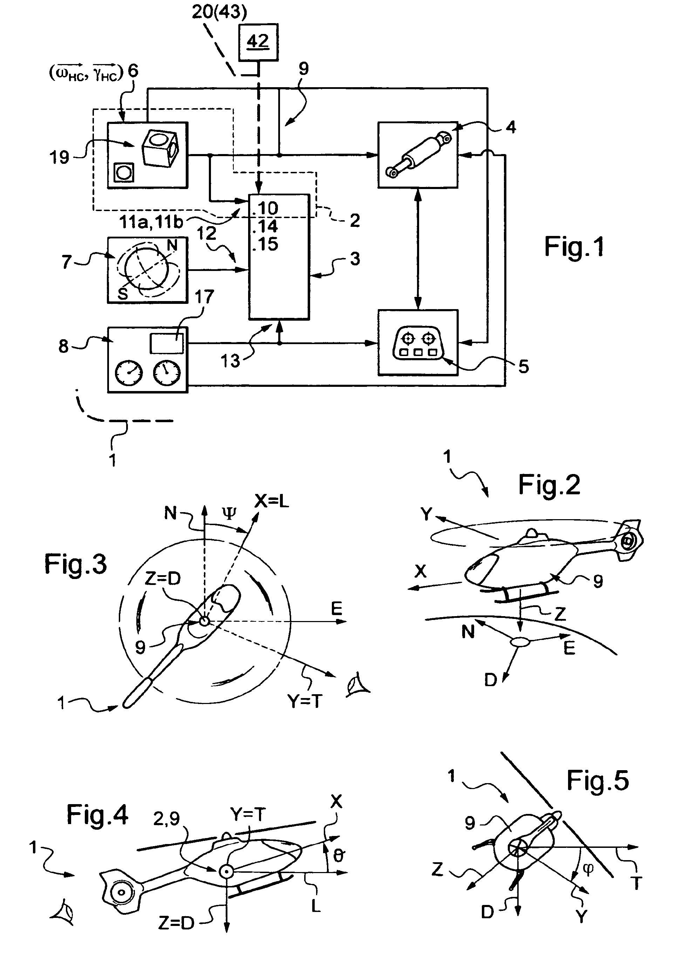

- la figure 2 est une vue schématique en perspective d'un aéronef conforme à l'invention, dans une orientation quelconque non canonique, auquel est lié un repère porteur (en anglais « body ») dont les axes forment un trièdre X, Y, Z ; On voit également sur cette figure un repère géographique local (en anglais « navigation ») dont les axes forment un trièdre N, E, D ; les figures 3, 4 et 5 décomposent la rotation tridimensionnelle (3D) permettant le passage dudit repère géographique local au dit repère porteur en trois rotations élémentaires autour d'un axe unique à chaque fois, en vu de définir les angles d'Euler.

- La figure 3 est une vue schématique de dessus de l'aéronef de la figure 2, et représente cet aéronef après qu'il ait effectué une rotation - par rapport à une position virtuelle canonique où le trièdre X, Y, Z coïncide avec le trièdre N, E, D - d'un angle de cap autour de l'axe vertical « D », définissant un repère horizontal (en anglais « level ») dont les axes forment un trièdre L, T, D ;

- La figure 4 est une vue de côté similaire aux figures 2 et 3, qui représente l'aéronef ayant virtuellement effectué une rotation en tangage d'un angle de piqué ou cabré, autour de l'axe « T » dit travers ;

- La figure 5 est une vue de derrière similaire aux figures 2-4, et illustre l'aéronef ayant atteint sa position réelle après avoir effectué une dernière rotation, en roulis, d'un angle autour de son propre axe longitudinal « X »;

- la figure 6 représente schématiquement les traitements de données propres à une réalisation de l'invention, où une plateforme virtuelle intègre des mesures inertielles pour calculer des estimations d'angles et de vitesse, et où un module calcule des gains dépendants du taux de virage de l'aéronef ;

- la figure 7 représente schématiquement selon l'invention, la structure des gains (ou coefficients de combinaison linéaire) montrant : i) la symétrie des gains directs sur les composantes horizontales d'écart de vitesse, ainsi que l'antisymétrie (ou les signes opposés) des gains dits croisés; ii) la variabilité dans le temps desdits gains directs et croisés ; et

- la figure 8 représente schématiquement l'art antérieur avec uniquement des gains directs et constants.

Sur les figures 1 à 6, la référence numérique générale 1 désigne un aéronef. Sur les figures 2 à 5, cet aéronef 1 est un hélicoptère, mais ceci n'est pas limitatif.

Sur la figure 1, on voit à bord de l'aéronef 1 conforme à l'invention, divers équipements d'aide au pilotage. En particulier, l'aéronef 1 comporte une centrale d'assiettes 2. La référence 2 désigne par exemple un système « AHRS » et/ou des instruments de secours de l'aéronef 1 tels que les « Integrated Electronic Standby Instrument » ou IESI. En général, dans un aéronef 1 on trouve à la fois un système de type « AHRS » ainsi que des instruments de secours.

La centrale 2 comporte notamment une plate-forme virtuelle 3 de calcul.

Cette plateforme 3 entretient par calcul une estimation des directions des axes géographiques, cette estimation est entachée de trois erreurs angulaires : les deux angles d'inclinaison par rapport au plan horizontal vrai, et l'angle d'azimut défini par rapport à la direction du Nord magnétique vrai.

Sur la figure 1, on a représenté un pilote automatique 4, ainsi qu'un affichage 5 de l'aéronef 1. Sur la figure 1, la centrale 2 de l'aéronef 1 reçoit en entrée des signaux en provenance d'une unité de mesure inertielle 6 (IMU, qui fait partie de la centrale d'assiettes 2 sur l'exemple de la figure 1), d'un magnétomètre triaxial 7 ainsi que d'un capteur 8 de mesure de données « air ».

Dans cette réalisation, l'affichage 5 pour le pilote de l'aéronef 1 est un PFD ou FDS, tandis que le pilote automatique est souvent appelé AFCS.

Selon une réalisation, ce capteur 8 comporte un anémomètre à tube de Pitot. D'autres réalisations possèdent un capteur 8 à radar Doppler ou un système d'anémométrie vectorielle calculée par moyens internes, par exemple VIMI.

Il est également possible dans le cadre de l'invention, d'obtenir une mesure de vitesse linéaire directement issue d'un capteur 8 qui s'exprime relativement aux axes géographiques N, E, D (voir figure 2). Typiquement, un tel capteur 8 est un système GPS ou Galileo.

D'un point de vue matériel, l'invention est vue comme un dispositif 9 d'estimation des angles d'assiettes ($\theta$, $\varphi$ : voir figures 4 à 6) de l'aéronef 1. Sur les figures, ce dispositif 9 est embarqué à bord de cet aéronef 1.

Comme évoqué, une réalisation de ce dispositif 9 comporte une plateforme virtuelle 3. Cette plateforme virtuelle 3 (en anglais « strapdown algorithm ou SDA») intègre des mesures inertielles issues de l'unité 6 de mesures inertielles à composants liés.

Les mesures inertielles en entrée de la plateforme virtuelle 3 sont des mesures de l'accélération linéaires, parvenant à la plateforme virtuelle sur son port 11a, ainsi que de la vitesse angulaire en repère porteur, parvenant à la plateforme virtuelle sur son port 11b. La plateforme virtuelle délivre en sortie des estimations des trois angles de roulis, de tangage et de cap (du porteur), ainsi que d'une vitesse air moyenne (du porteur) en repère géographique.

Sont ainsi générées des estimations des angles d'assiettes, ainsi que d'un angle de cap et d'une vitesse linéaire, par cette plateforme 3 et en particulier par des moyens d'intégration algorithmique 10 (figure 1) de mesures inertielles indicatives de la vitesse angulaire et de l'accélération linéaire de l'aéronef 1.

L'estimation de vitesse linéaire est exprimée par deux composantes horizontales et une composante verticale, en projection sur les axes géographiques N, E, D.

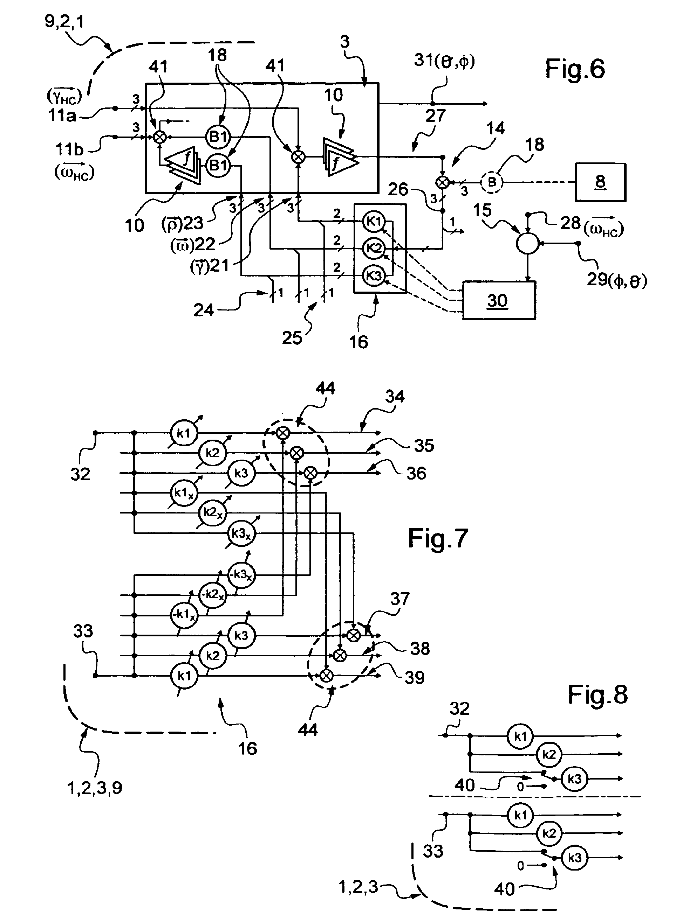

Le dispositif 9 conforme à l'invention possède également un port d'entrée 12 pour l'acquisition des mesures effectuées par ledit magnétomètre 7, un port d'entrée 13 pour l'acquisition de ladite mesure de vitesse linéaire de l'aéronef, ainsi que des ports 21, 22 et 23 (figure 6) qui permettent que cette plateforme 3 applique des corrections aux mesures inertielles. Ces corrections sont des vecteurs tridimensionnels, exprimés en axes géographiques N, E, D.

Dans la réalisation de la figure 6, on voit que le dispositif 9 et en particulier la plateforme virtuelle 3, comporte des moyens de soustraction 14.

Sur la figure 6, une mesure de vitesse linéaire de l'aéronef est fournie à ces moyens de soustraction 14 après projection depuis le repère porteur vers le repère géographique N, E, D par une matrice de passage B.

On remarque au sein de la plateforme 3, une matrice $B^{-1}$ de passage du repère géographique N, E, D vers le repère porteur X, Y, Z. Tout comme une matrice B de passage du repère porteur vers le repère géographique N, E, D, la matrice $B^{-1}$ est calculée en tant que fonction des trois angles de roulis, tangage et cap. Elle peut aussi être calculée par inversion de la matrice B.

Pour acquérir ladite mesure de vitesse linéaire de l'aéronef, lesdits moyens 14 sont reliés, via le gain matriciel B, à un capteur de vitesse linéaire, tel que celui désigné en 8 sur la figure 1. Les moyens 14 sont agencés pour former un écart de vitesse, exprimé en axes géographiques, en retranchant une valeur 27 (figure 6) d'estimation de vitesse linéaire générée par la plateforme virtuelle 3 à une mesure de la vitesse de l'aéronef 1 issue dudit capteur et exprimée en axes géographiques également.

Toujours dans la réalisation de la figure 6, on voit que le dispositif 9 et en particulier la plateforme virtuelle 3, comporte des moyens de projection 15. Ces moyens de projection 15 permettent de former une estimation (projection ou dérivation) de taux de virage par projection de la mesure de vitesse angulaire sur l'axe vertical D. Cette projection par les moyens 15 est opérée par un opérateur de projection « P » (figure 6) qui est calculé à partir des angles d'assiette.

On notera que ce mode de calcul du taux de virage n'est pas limitatif. Ainsi, selon une autre réalisation de l'invention, le taux de virage est formé par calcul de la dérivée par rapport au temps de l'angle de cap plutôt que par projection de la mesure de vitesse angulaire.

Par ailleurs, à un port d'entrée 28 des moyens de projection 15, est entrée une valeur de vitesse angulaire $\vec{\omega}_{HC}$, comme par exemple celle parvenant par ailleurs au port d'entrée 11-b de la plateforme 3. L'opérateur de ladite projection est calculé à partir de deux angles d'assiettes $(\theta, \varphi)$ fournis à un autre port d'entrée 29 de ces moyens 15.

En outre, la réalisation de la figure 6, prévoit que la centrale 2 comporte des moyens de combinaison linéaire 16. Ces moyens de combinaison linéaire 16 sont agencés de manière que chacune des deux composantes horizontales (N et E) des corrections d'accélération angulaire, de vitesse angulaire et d'accélération linéaire soit une combinaison linéaire des deux composantes horizontales d'écart de vitesse.

On remarque en 26 sur la figure 6 une sortie de la composante verticale de l'écart de vitesse vers un filtre vertical de la centrale 2, prélevé à la sortie des moyens de soustraction 14.

En synthèse, avec le dispositif 9 de l'invention, la centrale 2 comprend une plateforme virtuelle 3 qui intègre les mesures inertielles issues de capteurs liés au porteur, ceci afin de calculer des estimations en sorties, à savoir :

- des trois angles de roulis, de tangage et de cap (de l'aéronef 1), ainsi que
- du vecteur vitesse linéaire (de l'aéronef 1) en repère géographique.

Un module de gain des moyens 16 calcule, à partir de ses entrées écart de vitesse Nord 32 et écart de vitesse Est 33 (figure 7) les composantes horizontales de trois vecteurs de corrections à trois dimensions (3D) exprimés dans le repère géographique (N, E, D).

Ces trois vecteurs de corrections sont destinés à appliquer à la plateforme virtuelle des corrections :

i) d'accélération angulaire $\vec{\rho}$ ;
ii) de vitesse angulaires $\vec{\omega}$, et
iii) d'accélération linéaire $\vec{\gamma}$.

Enfin, un étage de calcul d'un vecteur d'écart de vitesse retranche la vitesse estimée (par la plateforme virtuelle 3) à une mesure de vitesse issue d'un capteur de vitesse (après projection de ladite mesure de vitesse dans le repère géographique, si ledit capteur de vitesse opère dans un autre repère).

Chacune des deux composantes Nord et Est de chacun des trois vecteurs de correction (d'accélération angulaire $\vec{\rho}$, de vitesse angulaire $\vec{\omega}$ et d'accélération linéaire $\vec{\gamma}$) est calculée, en tant que combinaison linéaire des deux composantes Nord et Est dudit vecteur d'écart de vitesse.

Dans une réalisation, les troisièmes ($3^{èmes}$) composantes, verticales, des corrections d'accélération angulaire et de vitesse angulaire sont issues du filtre de cap. Dans une réalisation, la troisième composante, verticale, de la correction d'accélération linéaire est issue du filtre de verticale.

On met ainsi en oeuvre douze coefficients (2 écarts de vitesse x 3 corrections d'états x 2 axes Nord et Est = 12) dans des combinaisons linéaires. Selon l'invention, ces douze coefficients sont des fonctions continues du temps et dépendent de ladite composante verticale de vitesse angulaire, ou taux de virage, issue de l'opérateur de projection 15.

Notons que sur la réalisation de la figure 6, des gains $K_1$, $K_2$ et $K_3$ sont calculés par des moyens de calcul 30 qui ont un port d'entrée sur lequel est appliqué ledit taux de virage, issu de l'opérateur de projection 15.

Selon certaines réalisations où la centrale 2 est un instrument de secours électronique intégré (Integrated Electronic Standby Instrument, IESI) n'ayant vocation à fournir ni une indication du cap, ni une indication de vitesse verticale, les ports d'entrées 21, 22, 23 des corrections de la plateforme virtuelle 3 reçoivent une contribution nulle sur l'axe vertical.

Selon un mode de réalisation, la centrale 2 est une AHRS.

Elle est dans ce cas reliée d'une part à un magnétomètre tel que le magnétomètre triaxial 7 de la figure 1. Ce magnétomètre est solidaire de l'aéronef 1, tout comme d'ailleurs l'unité 6. D'autre part, cette centrale 2 est reliée à un capteur d'altitude ou de vitesse verticale, qui est représenté schématiquement en 17 sur la figure 1, où il fait partie du capteur 8.

Dans ce mode de réalisation, la centrale 2 a des filtres de cap et de verticale. Les ports d'entrées 21-23 reçoivent alors des termes verticaux de correction d'accélération et de vitesse angulaire en tant que contribution dudit filtre de cap, ainsi qu'une correction verticale d'accélération linéaire en tant que contribution dudit filtre de verticale. Un tel filtre de verticale, dédié aux mouvements linéaires verticaux, est décrit dans le document FR 2 840 073.

Selon la réalisation de la figure 1, une triade de gyromètres 19, sont au moins en partie de type MEMS. Dans d'autres réalisations, cette triade de gyromètres 19 comporte également au moins un gyromètre de type FOG.

Selon une réalisation de l'invention, l'unité de mesures inertielles (dite « IMU » pour l'anglais « Inertial Measurement Unit ») 6 effectue des mesures de vitesse angulaire et d'accélération linéaire (dites aussi « forces spécifiques ») sous forme de vecteurs tridimensionnels. Dans des réalisations, ces mesures sont fournies par des MEMS.

Dans des réalisations le capteur 8 comporte un récepteur 42 par exemple de type GPS ou analogues. Dans ces cas où une latitude de l'aéronef 1 est disponible, par exemple issue d'un tel récepteur 42, ou encore d'un fichier de configuration (référencé en 43 sur la figure 1), cette latitude peut être exploitée par la plateforme virtuelle 3 pour appliquer aux gyromètres une correction de rotation terrestre. La plateforme virtuelle 3 possède alors un port d'entrée 20 tel que celui qui est représenté (en pointillés) sur la figure 1.

Dans des réalisations de l'invention où sont effectuées des corrections verticales de vitesse angulaire et d'accélération angulaire, ces corrections sont calculées par le filtre de cap, qui lui-même exploite les mesures issues d'un magnétomètre 7, ce dernier étant comme sur la figure 1 solidaire de l'aéronef 1.

La centrale (2) conforme à l'invention met en oeuvre un procédé qui est maintenant exposé.

Selon un étage de traitement du procédé conforme à l'invention, l'estimation déjà évoquée des angles d'assiette, ainsi qu'une estimation d'un angle de cap et une estimation d'un vecteur vitesse linéaire exprimé en axes géographiques (N, E, D), sont générées par la plateforme virtuelle 3 par intégration algorithmique de mesures issues de l'unité 6 de mesures inertielles à composants liés, lesdites mesures étant indicatives d'une vitesse angulaire $\vec{\omega}_{HC}$ (acquises sur un port d'entrée référencé en 11b, figure 6) et d'une accélération linéaire $\vec{\gamma}_{HC}$ (acquises sur un port d'entrée référencé 11a, figure 6) de l'aéronef 1.

Selon un autre étage de traitement, l'intégration algorithmique typiquement effectuée par les moyens 10 (figure 1) a des entrées de correction (par exemple référencée en 21-23, figure 6) desdites mesures inertielles, exprimées en axes géographiques par deux composantes horizontales (Nord et Est) et une composante verticale. De gauche à droite sur la figure 6, les trois entrées 23-21 sont assignées à la correction d'accélération angulaire $\vec{\rho}$, à la correction de vitesse angulaire $\vec{\omega}$, et à la correction d'accélération linéaire $\vec{\gamma}$. En 24, on a représenté sur la figure 6 deux entrées, de corrections de vitesse et d'accélération angulaires verticales, issues d'un filtre de cap, et en 25 une entrée de correction d'accélération linéaire verticale issue d'un filtre vertical du dispositif 9.

A un autre étage de traitement, les moyens de soustraction 14 forment un écart de vitesse (par exemple référencé en 26 sur la figure 6) également exprimé en axes géographiques, en retranchant l'estimation de vitesse linéaire (par exemple référence 27, figure 6) générée par ladite intégration algorithmique (plateforme 3) à une mesure de la vitesse linéaire de l'aéronef 1 telle que celle qui est issue du capteur 8. A l'entrée des moyens de soustraction, la mesure de la vitesse linéaire est exprimée en axes géographiques.

Encore un autre étage de traitement conforme à une réalisation de l'invention est tel que le moyen de projection 15 forme une estimation d'un taux de virage de l'aéronef 1. Cette estimation du taux de virage est formée par projection de la mesure de vitesse angulaire $\vec{\omega}_{HC}$ sur l'axe vertical D, suivant un opérateur de projection qui est fonction desdits angles d'assiette.

Selon l'invention, chacune des deux composantes horizontales desdites corrections d'accélération angulaire $\vec{\rho}$, de vitesse angulaire $\vec{\omega}$ et d'accélération linéaire $\vec{\gamma}$ est une combinaison linéaire des deux composantes horizontales du vecteur écart de vitesse.

Il résulte de ceci la mise en oeuvre de gains directs désignés « $k_1$, $k_2$, $k_3$- » comme dans l'art antérieur, mais également de gains croisés entre lesdits axes horizontaux, caractéristiques de l'invention, et désignés « $-k_{1x}$ $-k_{2x}$, $-k_{3x}$ » et « $k_{1x}$ $k_{2x}$, $k_{3x}$ » sur la figure 7.

Chacun de ces coefficients, ou gains, de ladite combinaison linéaire est une fonction continue du temps (on dit parfois aussi que la fonction est continûment variable au cours du temps) et est dépendant de ladite estimation du taux de virage. De la sorte, les estimations d'angles d'assiette sont stables y compris pendant les phases prolongées de virage de l'aéronef 1. Ces estimations d'angles d'assiettes sont produites à une sortie 31 de la plateforme 3 visible sur la figure 6, en sortie de la plateforme virtuelle 3.

Selon une réalisation, lesdits coefficients de la combinaison linéaire sont les termes d'une matrice K($t$) représentant la solution de l'équation différentielle à temps continu, dite « de Riccati », suivante :

$$\frac{dP}{dt} = FP + PF^T + Q - PH^T R^{-1} HP$$

$$K = PH^T R^{-1}$$

Dans cette équation différentielle de Riccati :

- t est la variable temps,
- P est la matrice de covariance du bruit d'état,
- Q est la matrice de densité spectrale de puissance (PSD) des erreurs affectant les mesures inertielles,
- R est la matrice de densité spectrale de puissance affectant la mesure de vitesse linéaire,
- H est la matrice de projection du vecteur d'état sur un sous-espace d'observation, et
- F est la matrice d'évolution du système linéaire décrivant la dynamique de propagation des composantes horizontales des corrections dans ladite intégration algorithmique effectuée par la plateforme 3.

Ci-dessous, les points au dessus des symboles de représentation de vecteurs, désignent la dérivée par rapport au temps de ce vecteur.

Selon l'invention, ladite dynamique de propagation des erreurs dans cette intégration algorithmique est décrite par la formulation d'état suivante :

$$\begin{pmatrix} \dot{\vec{\delta}} \\ \dot{\vec{\imath}} \\ \dot{\vec{v}} \end{pmatrix} = \begin{pmatrix} \Omega & 0 & 0 \\ 1 & 0 & 0 \\ 0 & G & 0 \end{pmatrix} \begin{pmatrix} \vec{\delta} \\ \vec{\imath} \\ \vec{v} \end{pmatrix} + \begin{pmatrix} \vec{\rho} \\ \vec{\omega} \\ \vec{\gamma} \end{pmatrix} \text{, avec } F(t) = \begin{pmatrix} \Omega & 0 & 0 \\ 1 & 0 & 0 \\ 0 & G & 0 \end{pmatrix}$$

$$(\vec{v}) = \begin{pmatrix} 0 & 0 & 1 \end{pmatrix} \begin{pmatrix} \vec{\delta} \\ \vec{\imath} \\ \vec{v} \end{pmatrix} \qquad H = \begin{pmatrix} 0 & 0 & 1 \end{pmatrix}$$

où :

- $(\vec{\delta}\ \vec{\imath}\ \vec{v})^T$ est un vecteur d'état, constitué des paires de composantes horizontales :

    i) du biais affectant ladite mesure de vitesse angulaire ($\vec{\delta}$) ;
    ii) des deux angles ($\vec{\imath}$) d'inclinaison de la plateforme virtuelle 3 par rapport a un plan horizontal du repère géographique vrai ; et
    iii) du biais affectant ladite estimation de vitesse ($\vec{v}$) ;

- $(\vec{\rho}\ \vec{\omega}\ \vec{\gamma})^T$ est un vecteur de commande, constitué des paires de composantes horizontales des corrections des mesures inertielles (d'accélération angulaire $\vec{\rho}$, de vitesse angulaire $\vec{\omega}$, et d'accélération linéaire $\vec{\gamma}$) ;

- $\Omega = \begin{pmatrix} 0 & -\dot{\psi} \\ \dot{\psi} & 0 \end{pmatrix}$ est une matrice 2 x 2 définie par ledit taux de virage $\dot{\psi}$ ; et

- $G = \begin{pmatrix} 0 & g \\ -g & 0 \end{pmatrix}$ est une matrice 2 x 2 définie par le moduleg de la gravité locale.

Selon une mise en oeuvre du procédé de l'invention, ladite équation de Riccati est résolue dans une forme approchée dite « à temps discret ».

Pour mieux illustrer les avantages de l'invention, les figures 7 et 8 sont maintenant rapprochées. La figure 8 montre des gains $k_1$, $k_2$, $k_3$ qui sont constants, la poursuite du biais des gyromètres étant classiquement interrompue par des moyens 40, au-delà d'un taux de virage choisi. La ligne horizontale en trait discontinu montre bien l'indépendance des axes Nord et Est ou, en d'autres termes, l'absence de croisement entre lesdits axes.

Par contraste, la figure 7 décrit une réalisation de l'invention. A gauche sur cette figure sont représentées les entrées 32 et 33 des composantes respectivement nord et Est de l'écart de vitesse.

En sorties, à droite, on voit de haut en bas, une composante 34 Nord de la correction d'accélération linéaire $\vec{\gamma}$, une composante 35 Est de la correction de vitesse angulaire $\vec{\omega}$, une composante 36 Est de la correction d'accélération angulaire $\vec{\rho}$, (et symétriquement) une composante 37 Nord de la correction de vitesse angulaire $\vec{\omega}$, une composante 38 Nord de la correction d'accélération angulaire $\vec{\rho}$, et enfin une composante 39 Est de la correction d'accélération linéaire $\vec{\gamma}$.

Cette figure 7 met en évidence la différence avec la description précédente. On notera par ailleurs :

- la symétrie des gains directs (on a les mêmes gains « directs » $k_1$, $k_2$, et $k_3$ sur les deux composantes Nord et Est d'écart de vitesse ; et
- l'antisymétrie des gains « croisés » (on a des gains opposés : $k_{1x}$, $k_{2x}$, et $k_{3x}$ d'une part, et $-k_{1x}$, $-k_{2x}$, et $-k_{3x}$ d'autre part sur les deux composantes Nord et Est d'écart de vitesse.

On comprend que l'estimation des angles d'assiettes selon l'invention est générée par intégration algorithmique de mesures inertielles indicatives de vitesse angulaire et d'accélération linéaire dudit aéronef 1.

Un écart de vitesse et un taux de virage sont obtenus. Des composantes horizontales de corrections souhaitées sont obtenues par combinaison linéaire de la composante horizontale qui est parallèle à ladite correction et de l'autre composante horizontale, perpendiculaire, i.e. non colinéaire, à ladite correction, dudit écart de vitesse.

On voit sur la figure 6, des moyens 30 de calcul des gains $K_1 = \begin{pmatrix} k_1 & -k_{1x} \\ k_{1x} & k_1 \end{pmatrix}$, $K_2 = \begin{pmatrix} k_2 & -k_{2x} \\ k_{2x} & k_2 \end{pmatrix}$ et

$$K_3 = \begin{pmatrix} k_3 & -k_{3x} \\ k_{3x} & k_3 \end{pmatrix}.$$

Ces moyens de calcul 30 élaborent des coefficients, ou gains, qui sont continument variables au cours du temps et dépendants de ladite estimation du taux de virage, et dont certains sont croisés entre lesdits axes horizontaux.

Dans une réalisation, ces moyens de calcul 30 sont un solveur d'équation différentielle de Riccati.

Sur la figure 6, on voit que les opérateurs de projection sont désignés en 18 (matrice $B^{-1}$ de projection du repère géographique vers le repère porteur en aval des entrées 22 et 23, et matrice B de projection depuis le repère porteur vers le repère géographique en amont des moyens 14). La référence 41 sur la figure 6, ainsi que la référence 44 sur la figure 7 désignent des moyens de sommation selon l'invention.

On a vu que l'invention s'attache à isoler le filtre d'assiettes, dont l'indépendance vis-à-vis des filtres de cap et de verticale est démontrable mathématiquement. La simplicité qui résulte de ce filtre d'assiettes isolé permet la démonstration mathématique de sa stabilité inconditionnelle.

De fait, l'invention permet que les estimations des angles d'assiette soient stables pendant les phases de virage de l'aéronef, tout en préservant simultanément une estimation des biais des gyromètres pendant lesdites phases de virage.

Naturellement, la présente invention est sujette à de nombreuses variantes. On comprend qu'il n'est pas concevable d'énumérer de manière exhaustive tous les modes possibles de réalisation. Il est bien sûr envisageable de remplacer tout moyen décrit par un moyen équivalent, sans sortir du cadre de la présente invention, tel que défini par les revendications.

## Revendications

1. Procédé d'estimation des angles d'assiettes $(\theta, \varphi)$ d'un aéronef (1), selon lequel :

   ladite estimation des angles d'assiettes $(\theta, \varphi)$, ainsi qu'une estimation d'un angle de cap $(\psi)$ et une estimation d'un vecteur $(\vec{v})$ de vitesse linéaire exprimées en axes géographiques (N, E, D), sont générées par intégration algorithmique (3) de mesures issues d'une unité de mesures inertielles (6) à composants liés, lesdites mesures étant indicatives d'une vitesse angulaire ($\vec{\omega}$) et d'une accélération linéaire ($\vec{\gamma}$) dudit aéronef (1) ; **caractérisé en ce que** ladite unité de mesure comporte au moins un gyromètre à structure vibrante de type MEMS, et ladite intégration algorithmique ayant en outre des entrées (21, 22, 23) de correction desdites mesures inertielles, exprimées en axes géographiques (N, E, D) par deux composantes horizontales et une composante verticale et permettant des corrections :

d'accélération angulaire ($\vec{\rho}$),
de vitesse angulaire ($\vec{\omega}$) et
d'accélération linéaire ($\vec{\gamma}$) ;
un écart de vitesse linéaire exprimé en axes géographiques (N, E, D) est formé en retranchant l'estimation de vitesse linéaire ($\vec{v}$) générée par ladite intégration algorithmique (3) à une mesure de la vitesse linéaire de l'aéronef (1) issue d'un capteur (8) de vitesse linéaire et exprimée en axes géographiques (N, E, D) également ;
une estimation d'un taux de virage de l'aéronef (1) est formée par estimation (15) de la mesure de vitesse angulaire sur un axe géographique vertical suivant un opérateur de projection qui est fonction desdits angles d'assiettes ($\theta$, $\varphi$) ;
chacune des deux composantes horizontales desdites corrections d'accélération angulaire ($\vec{\rho}$). de vitesse angulaire ($\vec{\omega}$) et d'accélération linéaire ($\vec{\gamma}$) est une combinaison linéaire des deux composantes horizontales, à savoir celle qui est parallèle à la correction et l'autre composante horizontale non colinéaire à ladite correction, dudit écart de vitesse ; d'où résulte l'obtention de coefficients croisés entre lesdits axes horizontaux ; et
chacun des coefficients de ladite combinaison linéaire est une fonction continue du temps et est dépendant de ladite estimation du taux de virage ; de sorte que le filtre d'assiette est indépendant vis-à-vis des filtres de cap et de verticale, permettant que les estimations des angles d'assiettes sont stables y compris lors des virages de l'aéronef.

2. Procédé selon la revendication 1, **caractérisé en ce que** lesdits coefficients de la combinaison linéaire sont les termes d'une matrice K($t$) représentant la solution d'une équation différentielle à temps continu, dite de « Riccati », de la forme suivante :

$$\frac{d\mathbf{P}}{dt} = \mathbf{F}\mathbf{P} + \mathbf{P}\mathbf{F}^{\mathsf{T}} + \mathbf{Q} - \mathbf{P}\mathbf{H}^{\mathsf{T}}\mathbf{R}^{-1}\mathbf{H}\mathbf{P}$$

$$\mathbf{K} = \mathbf{P}\mathbf{H}^{\mathsf{T}}\mathbf{R}^{-1}$$

Où : t est la variable temps, P est la matrice de covariance du bruit d'état; Q est la matrice de densité spectrale de puissance des bruits affectant lesdites mesures inertielles, R est la matrice de densité spectrale de puissance affectant ladite mesure de vitesse linéaire, H est la matrice de projection du vecteur d'état sur un sous-espace d'observation, et F est la matrice d'évolution du système linéaire décrivant la dynamique de propagation des composantes horizontales des corrections dans ladite intégration algorithmique :

$$\begin{pmatrix} \dot{\vec{\delta}} \\ \dot{\vec{\iota}} \\ \dot{\vec{v}} \end{pmatrix} = \begin{pmatrix} \Omega & 0 & 0 \\ 1 & 0 & 0 \\ 0 & G & 0 \end{pmatrix} \begin{pmatrix} \vec{\delta} \\ \vec{\iota} \\ \vec{v} \end{pmatrix} + \begin{pmatrix} \vec{\rho} \\ \vec{\omega} \\ \vec{\gamma} \end{pmatrix} \quad , \textbf{ avec } \quad \mathrm{F(t)} = \begin{pmatrix} \Omega & 0 & 0 \\ 1 & 0 & 0 \\ 0 & G & 0 \end{pmatrix}$$

$$(\vec{v}) = \begin{pmatrix} 0 & 0 & 1 \end{pmatrix} \begin{pmatrix} \vec{\delta} \\ \vec{\iota} \\ \vec{v} \end{pmatrix} \qquad \mathrm{H} = \begin{pmatrix} 0 & 0 & 1 \end{pmatrix}$$

Où :

- $(\vec{\delta}\ \vec{\iota}\ \vec{v})^{\mathsf{T}}$ est un vecteur d'état, constitué des paires de composantes horizontales : *i)* du biais ($\vec{\delta}$) affectant ladite

mesure de vitesse angulaire, *ii)* des deux angles ($\vec{i}$) d'inclinaison de la plateforme virtuelle 3 par rapport a un plan horizontal du repère géographique vrai, et *iii)* du biais ($\bar{v}$) affectant ladite estimation de vitesse

- $(\vec{\rho} \ \vec{\omega} \ \vec{\gamma})^T$ est un vecteur de commande, constitué des paires de composantes horizontales desdites corrections des mesures inertielles, à savoir : *i)* la correction d'accélération angulaire $\vec{\rho}$ *; ii)* la correction de vitesse angulaire $\vec{\omega}$, et *iii)* la correction d'accélération linéaire $\vec{\gamma}$   $\dot{\psi}$   **;** est une matrice 2 x 2 définie par ledit taux de virage $\dot{\psi}$ ; et

$$-\ G = \begin{pmatrix} 0 & g \\ -g & 0 \end{pmatrix}$$ est une matrice 2 x 2 définie par le module g de la gravité locale.

**3.** Procédé selon la revendication 2, **caractérisé en ce que** ladite équation de Riccati est résolue dans une forme approchée dite « à temps discret ».

**4.** Procédé selon l'une des revendications 1 à 3, **caractérisé en ce que** ladite mesure de vitesse linéaire est issue d'un capteur (8) qui s'exprime relativement à des axes liés à l'aéronef (1), cette mesure étant obtenue par projection à l'aide dudit opérateur de projection, desdits axes de l'aéronef (1) vers lesdits axes géographiques (N, E, D) ; ledit capteur (8) comportant au moins un anémomètre à tube de Pitot et/ou un capteur radar Doppler et/ou un système d'anémométrie vectorielle calculée par moyens internes ou analogues.

**5.** Procédé selon l'une des revendications 1 à 3, **caractérisé en ce que** ladite mesure de vitesse linéaire est directement issue (13) d'un capteur (8) qui s'exprime relativement aux axes géographiques (N, E, D) ; ledit capteur (8) étant un système de positionnement global ou analogues.

**6.** Procédé selon l'une des revendications 1 à 5, **caractérisé en ce qu'**on effectue en outre des corrections verticales de vitesse angulaire ($\vec{\omega}$) et d'accélération angulaire ($\vec{\rho}$) ; lesdites corrections étant calculées par un filtre de cap exploitant des mesures issues d'un magnétomètre (7) solidaire de l'aéronef (1).

**7.** Procédé selon d'une des revendications 1 à 6, **caractérisé en ce qu'**on effectue en outre une correction verticale d'accélération linéaire ($\vec{\gamma}$), ladite correction étant calculée par un filtre dit « de verticale » exploitant des mesures issues d'un capteur mesurant une altitude et / ou une vitesse verticale de l'aéronef (1) ; ledit capteur étant un système de positionnement global et / ou un capteur de pression ou analogues.

**8.** Dispositif (9) d'estimation des angles d'assiettes ($\theta$, $\varphi$) d'un aéronef (1) ; ce dispositif (9) comportant :

- Une plateforme virtuelle (3) traitant les données issues d'une unité de mesures inertielles (6) à composants liés, pour générer des estimations des angles d'assiettes ($\theta$, $\varphi$), ainsi que d'un angle de cap et d'une vitesse linéaire ; ladite plateforme (3) ayant des moyens d'intégration algorithmique (10) de mesures inertielles indicatives d'une vitesse angulaire et d'une accélération linéaire dudit aéronef (1) ; l'estimation de vitesse linéaire étant exprimée par deux composantes horizontales et une composante verticale en projection sur des axes géographiques (N, E, D) ; **caractérisé en ce que** ce dispositif (9) comporte :
- au moins un gyromètre à structure vibrante de type MEMS ;
- Des ports d'entrées (21, 22, 23) vers ladite plateforme virtuelle (3) pour que celle-ci applique des corrections, exprimées en axes géographiques (N, E, D), aux mesures inertielles, lesdites corrections consistant en des termes :
- d'accélération angulaire ($\vec{\rho}$) appliqués via le port (23) ;
- de vitesse angulaire ($\vec{\omega}$) appliqués via le port (22) ;
- et d'accélération linéaire ($\vec{\gamma}$) appliqués via le port (21);
- Des moyens (14) de soustraction reliés à un capteur (8 ; 42) de vitesse linéaire, agencés pour former un écart de vitesse, exprimé en axes géographiques (N, E, D), en retranchant l'estimation de vitesse linéaire générée par ladite plateforme virtuelle (3) à une mesure de la vitesse de l'aéronef (1) issue dudit capteur (8 ; 42) ;
- Des moyens (15) de projection, pour former une estimation de taux de virage par projection de la mesure de vitesse angulaire sur un axe vertical, suivant un opérateur de projection qui est calculé à partir des angles d'assiettes ($\theta$, $\varphi$); et
- Des moyens (16) de combinaison linéaire, agencés de manière que chacune des deux composantes horizontales desdites corrections d'accélération angulaire, de vitesse angulaire et d'accélération linéaire soit une combinaison linéaire des deux composantes horizontales, celle parallèle à ladite correction et celle non colinéaire à ladite correction, dudit écart de vitesse ; les coefficients desdites combinaisons linéaires étant des fonction continues du temps et étant dépendants de ladite estimation du taux de virage.

9. Dispositif (9) selon la revendication 8, **caractérisé en ce qu'**il met en oeuvre le procédé selon l'une des revendications 1 à 7.

10. Dispositif (9) selon la revendication 9, **caractérisé en ce qu'**il fait partie d'une centrale d'assiettes (2) d'un instrument de secours, lesdits ports d'entrées (21, 22, 23) de correction de la plateforme virtuelle (3) recevant une contribution nulle sur l'axe vertical.

11. Dispositif (9) selon la revendication 9, **caractérisé en ce qu'**il est en outre relié à un magnétomètre solidaire de l'aéronef (1) ainsi qu'à un capteur d'altitude ou de vitesse verticale ; ce dispositif (9) faisant partie d'une centrale d'assiettes (2) formant un système de mesure des deux angles d'assiette et de l'angle de cap ayant des filtres de cap et de verticale ; lesdits ports d'entrées de correction (21, 22, 23) reçoivent des termes verticaux en entrée (23) de correction d'accélération angulaire ($\vec{\rho}$) et en entrée (22) de vitesse angulaire ($\vec{\omega}$) en tant que contribution dudit filtre de cap, ainsi qu'en entrée (21) de correction verticale d'accélération linéaire ($\vec{\gamma}$) en tant que contribution dudit filtre de verticale.

12. Aéronef (1) **caractérisé en ce qu'**il emploie une estimation obtenue suivant le procédé conforme à l'une des revendications 1 à 7.

13. Aéronef (1) selon la revendication 12, **caractérisé en ce qu'**il comprend une centrale d'assiettes (2) dont fait partie un dispositif (9) conforme à l'une des revendications 8 à 11.

14. Aéronef (1) selon la revendication 13, **caractérisé en ce que** l'unité de mesures inertielles (6) comporte plusieurs gyromètres à structure vibrante de type MEMS.

**Claims**

1. Method of estimating the attitude angles ($\theta$, $\varphi$) of an aircraft (1), according to which:

   said estimate of the attitude angles ($\theta$, $\varphi$) and an estimate of a heading angle ($\Psi$) and an estimate of a linear velocity vector ($\vec{v}$) expressed in geographic axes (N, E, D) are generated by algorithmic integration (3) of measurements from a strapdown inertial measurement unit (6), said measurements being indicative of an angular velocity ($\vec{\omega}$) and of a linear acceleration ($\vec{\gamma}$) of said aircraft (1); **characterised in that** said measurement unit comprises at least one MEMS type vibrating structure gyrometer, and said algorithmic integration also having inputs (21, 22, 23) for correcting said inertial measurements, expressed in geographic axes (N, E, D) by two horizontal components and one vertical component and permitting:

   angular acceleration ($\vec{\rho}$),
   angular velocity ($\vec{\omega}$), and
   linear acceleration ($\vec{\gamma}$) corrections;
   a linear velocity difference expressed in geographic axes (N, E, D) is formed by subtracting the estimated linear velocity ($\vec{v}$) generated by said algorithmic integration (3) from a measurement of the linear velocity of the aircraft (1) from a linear velocity sensor (8) and expressed likewise in geographic axes (N, E, D);
   an estimate of the rate of turn of the aircraft (1) is formed by estimation (15) of the measured angular velocity about a vertical geographic axis using a projection operator that is a function of said attitude angles ($\theta$, $\varphi$);
   each of the two horizontal components of said angular acceleration ($\vec{\rho}$), angular velocity ($\vec{\omega}$), and linear acceleration ($\vec{\gamma}$) corrections is a linear combination of the two horizontal components of said velocity difference, namely of the horizontal component that is parallel to the correction and the other horizontal component that is not collinear with said correction; whereby cross coefficients are obtained between said horizontal axes; and
   each of the coefficients of said linear combination is a continuous function of time and is dependent on said estimated rate of turn; such that the attitude filter is independent of the heading and vertical filters, permitting the estimated attitude angles to be stable, including while the aircraft is turning.

2. Method according to Claim 1, **characterised in that** said linear combination coefficients are the terms of a matrix K(t) representing the solution to a continuous time differential equation called a "Riccati" equation, of the following

form:

$$\frac{dP}{dt} = FP + PF^T + Q - PH^T R^{-1} HP$$

$$K = PH^T R^{-1}$$

where: t is the time variable; P is the covariance matrix of state noise; Q is the power spectral density matrix of noise affecting said inertial measurements; R is the power spectral density matrix affecting said linear velocity measurement; H is the matrix for projecting the state vector onto an observation subspace; and F is the evolution matrix of the linear system describing the propagation dynamics of the horizontal correction components in said algorithmic integration:

$$\begin{pmatrix} \dot{\vec{\delta}} \\ \dot{\vec{\iota}} \\ \dot{\vec{v}} \end{pmatrix} = \begin{pmatrix} \Omega & 0 & 0 \\ 1 & 0 & 0 \\ 0 & G & 0 \end{pmatrix} \cdot \begin{pmatrix} \vec{\delta} \\ \vec{\iota} \\ \vec{v} \end{pmatrix} + \begin{pmatrix} \vec{\rho} \\ \vec{\omega} \\ \vec{\gamma} \end{pmatrix}$$

$$, \text{ with } F(t) = \begin{pmatrix} \Omega & 0 & 0 \\ 1 & 0 & 0 \\ 0 & G & 0 \end{pmatrix}$$

$$H = (0 \ 0 \ 1)$$

$$(\vec{v}) = (0 \ 0 \ 1) \cdot \begin{pmatrix} \vec{\delta} \\ \vec{\iota} \\ \vec{v} \end{pmatrix}$$

where:

- $(\vec{\delta} \ \vec{\iota} \ \vec{v})^T$ is a state vector constituted by pairs of horizontal components: *i)* of the bias ($\vec{\delta}$) affecting said angular velocity measurement; *ii)* of the two angles ($\vec{\iota}$) of inclination of the virtual platform 3 with respect to a horizontal plane of the true geographic frame of reference; and *iii)* of the bias ($\vec{v}$) affecting said estimate of velocity;
- $(\vec{\rho} \ \vec{\omega} \ \vec{\gamma})^T$ is a control vector constituted by pairs of horizontal components of said inertial measurement corrections, namely: *i)* angular acceleration correction $\vec{\rho}$; *ii)* angular velocity correction $\vec{\omega}$; and *iii)* linear acceleration correction $\vec{\gamma}$;

- $\Omega = \begin{pmatrix} 0 & -\dot{\psi} \\ \dot{\psi} & 0 \end{pmatrix}$ is a 2 x 2 matrix defined by said rate of turn $\dot{\psi}$; and

- $G = \begin{pmatrix} 0 & g \\ -g & 0 \end{pmatrix}$ is a 2 x 2 matrix defined by the modulus g of the local gravity.

3. Method according to Claim 2, **characterised in that** said Riccati equation is solved in a "discrete time" approximate form.

4. Method according to one of Claims 1 to 3, **characterised in that** said linear velocity measurement comes from a sensor (8) that expresses measurements relative to axes fixed to the aircraft (1), this measurement being obtained by projection, with the aid of said projection operator, of said axes of the aircraft (1) onto said geographic axes (N, E, D); said sensor (8) comprising at least one Pitot tube anemometer and/or a Doppler radar sensor and/or a vector anemometer system computed by internal means, or the like.

5. Method according to one of Claims 1 to 3, **characterised in that** said linear velocity measurement comes directly (13) from a sensor (8) that expresses measurements relative to the geographic axes (N, E, D); said sensor (8) being a global positioning system, or the like.

6. Method according to one of Claims 1 to 5, **characterised in that** vertical corrections are also performed for angular

velocity ($\vec{\omega}$) and angular acceleration ($\vec{\rho}$); said corrections being computed by a heading filter making use of measurements from a magnetometer (7) secured to the aircraft (1).

7. Method according to one of Claims 1 to 6, **characterised in that** a vertical correction is also performed for linear acceleration ($\vec{\gamma}$), said correction being computed by a so-called "vertical" filter making use of measurements from a sensor measuring an altitude and/or a vertical velocity of the aircraft (1); said sensor being a global positioning system and/or a pressure sensor, or the like.

8. Device (9) for estimating the attitude angles ($\theta$, $\varphi$) of an aircraft (1), said device (9) comprising:

   - a virtual platform (3) processing data from a strapdown inertial measurement unit (6), in order to generate estimates of the attitude angles ($\theta$, $\varphi$) and of a heading angle and of a linear velocity; said platform (3) having means for algorithmic integration (10) of inertial measurements indicative of an angular velocity and of a linear acceleration of said aircraft (1); the estimated linear velocity being expressed by two horizontal components and one vertical component projected onto geographic axes (N, E, D); **characterised in that** said device (9) comprises:
   - at least one MEMS type vibrating structure gyrometer;
   - input ports (21, 22, 23) to said virtual platform (3) enabling it to apply corrections expressed in geographic axes (N, E, D) to the inertial measurements, said corrections consisting in terms for:
   - angular acceleration ($\vec{\rho}$) applied via the port (23);
   - angular velocity ($\vec{\omega}$) applied via the port (22);
   - and linear acceleration ($\vec{\gamma}$) applied via the port (21);
   - subtraction means (14) connected to a linear velocity sensor (8; 42) and arranged to form a velocity difference expressed in geographic axes (N, E, D), by subtracting the linear velocity estimate generated by said virtual platform (3) from a measurement of the velocity of the aircraft (1) from said sensor (8; 42);
   - projection means (15) for forming an estimate of the rate of turn by projecting the measured angular velocity onto a vertical axis using a projection operator that is computed from the attitude angles ($\theta$, $\varphi$); and
   - linear combination means (16) arranged in such a manner that each of the two horizontal components of said angular acceleration, angular velocity, and linear acceleration corrections is a linear combination of the two horizontal components of said velocity difference, the horizontal component parallel to said correction and the horizontal component that is not collinear with said correction; the coefficients of said linear combinations being continuous functions of time and being dependent on said rate of turn estimate.

9. Device (9) according to Claim 8, **characterised in that** it implements the method according to one of Claims 1 to 7.

10. Device (9) according to Claim 9, **characterised in that** it forms part of an attitude unit (2) of an emergency instrument, said correction input ports (21, 22, 23) of the virtual platform (3) receiving a zero contribution concerning the vertical axis.

11. Device (9) according to Claim 9, **characterised in that** it is also connected to a magnetometer secured to the aircraft (1) and to an altitude or vertical velocity sensor; the device (9) forming part of an attitude unit (2) forming a system for measuring the two attitude angles and the heading angle, having heading and vertical filters; said correction input ports (21, 22, 23) receiving vertical terms at input (23) for correcting angular acceleration ($\vec{\rho}$) and at input (22) for angular velocity ($\vec{\omega}$) as a contribution from said heading filter, and at input (21) for vertical correction of linear acceleration ($\vec{\gamma}$) as a contribution from said vertical filter.

12. Aircraft (1) **characterised in that** it employs an estimate obtained using the method in accordance with one of Claims 1 to 7.

13. Aircraft (1) according to Claim 12, **characterised in that** it comprises an attitude unit (2) of which a device (9) in accordance with one of Claims 8 to 11 forms part.

14. Aircraft (1) according to Claim 13, **characterised in that** the inertial measurement unit (6) comprises a plurality of MEMS type vibrating structure gyrometers.

**EP 2 351 988 B1**

**Patentansprüche**

1.  Verfahren zur Abschätzung der Lagewinkel ($\theta$, $\varphi$) eines Luftfahrzeugs (1), bei dem
    der Schätzwert der Lagewinkel ($\theta$, $\varphi$) sowie ein Schätzwert eines Kurswinkels ($\Psi$) und ein Schätzwert eines Vektors ($\vec{v}$) der Lineargeschwindigkeit, die in Bezug auf geographische Achsen (N, E, D) ausgedrückt werden, durch algorithmische Integration (3) von Messwerten erzeugt werden, die von einer Inertial-Messeinheit (6) mit verknüpften Komponenten stammen, wobei die Messungen eine Winkelgeschwindigkeit ($\vec{\omega}$) und eine Linearbeschleunigung ($\vec{\gamma}$) des Luftfahrzeugs (1) anzeigen,
    **dadurch gekennzeichnet, dass**
    die Messeinheit mindestens ein Gyrometer mit Schwingungs-Aufbau vom MEMS-Typ aufweist und die algorithmische Integration ferner Eingänge (21, 22, 23) zur Korrektur der Trägheitsmessungen aufweist, die in Bezug auf geographische Achsen (N, E, D) durch zwei horizontale Komponenten und eine vertikale Komponente ausgedrückt werden und Korrekturen
    der Winkelbeschleunigung ($\vec{\rho}$),
    der Winkelgeschwindigkeit ($\vec{\omega}$) und
    der Linearbeschleunigung ($\vec{\gamma}$)
    erlauben,
    eine Differenz der Lineargeschwindigkeit, die in Bezug auf geographische Achsen (N, E, D) ausgedrückt wird, durch Abziehen des durch die algorithmische Integration (3) erzeugten Schätzwertes der Lineargeschwindigkeit ($\vec{v}$) von einem Messwert der Lineargeschwindigkeit des Luftfahrzeugs (1) erzeugt wird, der von einem Sensor (8) der Lineargeschwindigkeit stammt und ebenfalls in Bezug auf geographische Achsen ausgedrückt wird,
    ein Schätzwert einer Kurvenflugrate des Luftfahrzeugs (1) durch Abschätzen (15) aus der gemessenen Winkelgeschwindigkeit um eine vertikale geographische Achse unter Verwendung eines Projektionsoperators, der eine Funktion der Lagewinkel ($\theta$, $\varphi$) ist, erzeugt wird,
    jede der beiden horizontalen Komponenten der Korrekturen der Winkelbeschleunigung ($\vec{\rho}$) der Winkelgeschwindigkeit ($\vec{\omega}$) und der Linearbeschleunigung ($\vec{\gamma}$) eine lineare Kombination der beiden horizontalen Komponenten der Abweichung der Geschwindigkeit ist, nämlich der Komponente, die parallel zur Korrektur ist, und der anderen horizontalen Komponente, die mit der Korrektur nicht kolinear ist, wodurch als Ergebnis Kreuzkoeffizienten zwischen den horizontalen Achsen erhalten werden,
    und
    jeder der Koeffizienten der linearen Kombination eine kontinuierliche Funktion der Zeit ist und von der geschätzten Kurvenflugrate in der Weise abhängig ist, dass das Lagefilter gegenüber dem Kursfilter und dem Vertikalfilter unabhängig ist, was ermöglicht, dass die Schätzwerte der Lagewinkel auch bei Kurvenflug des Luftfahrzeugs stabil sind.

2.  Verfahren nach Anspruch 1,
    **dadurch gekennzeichnet, dass** die Koeffizienten der linearen Kombination die Terme einer Matrix K(t) sind, welche die Lösung einer Differentialgleichung mit kontinuierlicher Zeit, einer sogenannten Riccati-Gleichung, der folgenden Form darstellt:

$$\frac{dP}{dt} = FP + PF^{T} + Q - PH^{T}R^{-1}HP$$

$$K = PH^{T}R^{-1}$$

    worin bedeuten:
    t die Variable Zeit,
    P die Kovarianzmatrix des Zustandsrauschens,
    Q die Matrix der spektralen Leistungsdichte der Störungen, welche die Inertialmessungen beeinflussen,
    R die Matrix der spektralen Leistungsdichte, welche die Messung der Lineargeschwindigkeit beeinflusst,
    H die Matrix der Projektion des Zustandsvektors auf einen Beobachtungs-Unterraum
    und
    F die Variationsmatrix des linearen Systems, welche die Dynamik der Ausbreitung der horizontalen Komponenten der Korrekturen bei der algorithmischen Integration beschreibt:

$$
\begin{pmatrix} \dot{\vec{\delta}} \\ \dot{\vec{\imath}} \\ \dot{\vec{v}} \end{pmatrix} = \begin{pmatrix} \Omega & 0 & 0 \\ 1 & 0 & 0 \\ 0 & G & 0 \end{pmatrix} \begin{pmatrix} \vec{\delta} \\ \vec{\imath} \\ \vec{v} \end{pmatrix} + \begin{pmatrix} \vec{\rho} \\ \vec{\omega} \\ \vec{\gamma} \end{pmatrix}, \quad \text{mit} \quad F(t) = \begin{pmatrix} \Omega & 0 & 0 \\ 1 & 0 & 0 \\ 0 & G & 0 \end{pmatrix}
$$

$$
(\vec{v}) = \begin{pmatrix} 0 & 0 & 1 \end{pmatrix} \begin{pmatrix} \vec{\delta} \\ \vec{\imath} \\ \vec{v} \end{pmatrix} \qquad H = \begin{pmatrix} 0 & 0 & 1 \end{pmatrix}
$$

worin bedeuten:

- $(\vec{\delta}\ \vec{\imath}\ \vec{v})^{\mathsf{T}}$ einen Zustandsvektor, der aus Paaren von horizontalen Komponenten besteht:

    i) der Abweichung $(\vec{\delta})$, welche die Messung der Winkelgeschwindigkeit beeinflusst,
    ii) den beiden Neigungswinkeln $(\vec{\imath})$ der virtuellen Plattform (3) in Bezug auf eine horizontale Ebene des wahren geographischen Bezugssystems und
    iii) der Abweichung $(\vec{v})$, welche die Abschätzung der Geschwindigkeit beeinflusst,

- $(\vec{\rho}\ \vec{\omega}\ \vec{\gamma})^{\mathsf{T}}$ einen Steuervektor, der aus Paaren von horizontalen Komponenten der Korrekturen der Inertialmessungen besteht, nämlich

    i) der Korrektur der Winkelbeschleunigung $\vec{\rho}$,
    ii) der Korrektur der Winkelgeschwindigkeit $\vec{\omega}$ und
    iii) der Korrektur der Linearbeschleunigung $\vec{\gamma}$,

- $\Omega = \begin{pmatrix} 0 & -\dot{\psi} \\ \dot{\psi} & 0 \end{pmatrix}$ eine 2 x 2 - Matrix, die durch die Kurvenflugrate $\dot{\psi}$ definiert ist,

und

- $G = \begin{pmatrix} 0 & g \\ -g & 0 \end{pmatrix}$ eine 2 x 2 - Matrix, die durch den Modul g der örtlichen Gravitation definiert ist.

**3.** Verfahren nach Anspruch 2, **dadurch gekennzeichnet, dass** die Riccati-Gleichung in Form einer als "zeitdiskret" bezeichneten Näherung gelöst wird.

**4.** Verfahren nach einem der Ansprüche 1 bis 3,
**dadurch gekennzeichnet, dass** die Messung der Lineargeschwindigkeit von einem Sensor (8) stammt, dessen Messung sich auf mit dem Luftfahrzeug (1) verbundene Achsen bezieht, wobei diese Messung durch Projektion der Achsen des Luftfahrzeugs (1) mit Hilfe des Projektionsoperators auf die geographischen Achsen (N, E, D) erhalten wird, wobei der Sensor (8) mindestens ein Pitot-Rohr-Anemometer und/oder ein Doppler-Radar-Sensor und/oder ein System zur vektoriellen Anemometrie mit Berechnung durch interne oder analoge Mittel ist.

**5.** Verfahren nach einem der Ansprüche 1 bis 3,
**dadurch gekennzeichnet, dass** die Messung der Lineargeschwindigkeit direkt von einem Sensor (8) stammt (13), dessen Messung sich auf die geographischen Achsen (N, E, D) bezieht, wobei der Sensor (8) ein globales Positionierungssystem oder dergleichen ist.

**6.** Verfahren nach einem der Ansprüche 1 bis 5,
**dadurch gekennzeichnet, dass** ferner vertikale Korrekturen der Winkelgeschwindigkeit $(\vec{\omega})$ und der Winkelbeschleunigung $(\vec{\rho})$ durchgeführt werden, wobei die Korrekturen durch ein Kursfilter berechnet werden, bei dem Messungen benutzt werden, die von einem Magnetometer (7) stammen, das mit dem Luftfahrzeug (1) verbunden ist.

**7.** Verfahren nach einem der Ansprüche 1 bis 6,
**dadurch gekennzeichnet, dass** ferner eine vertikale Korrektur der Linearbeschleunigung $(\vec{\gamma})$ durchgeführt wird, wobei die Korrektur durch ein als "Vertikalfilter" bezeichnetes Filter berechnet wird, bei dem Messungen benutzt werden, die von einem Sensor stammen, der eine Höhe und/oder eine Vertikalgeschwindigkeit des Luftfahrzeugs (1) misst, wobei der Sensor ein globales Positionierungssystem und/oder ein Drucksensor oder dergleichen ist.

**8.** Vorrichtung (9) zum Abschätzen der Lagewinkel ($\theta$, $\varphi$) eines Luftfahrzeugs (1), wobei diese Vorrichtung (9) aufweist:

- eine virtuelle Plattform (3), die Daten verarbeitet, die von einer Inertial-Messeinheit (6) mit verknüpften Komponenten stammen, zur Erzeugung von Schätzwerten der Lagewinkel ($\theta$, $\varphi$) sowie von Schätzwerten eines Kurswinkels und einer Lineargeschwindigkeit, wobei die Plattform (3) eine Einrichtung zur algorithmischen Integration (10) der Inertialmessungen aufweist, die eine Winkelgeschwindigkeit und eine Lineargeschwindigkeit des Luftfahrzeugs (1) anzeigen, wobei die Abschätzung der Lineargeschwindigkeit durch zwei horizontale Komponenten und eine vertikale Komponente in Projektion auf geographische Achsen (N, E, D) ausgedrückt wird, **dadurch gekennzeichnet, dass** diese Vorrichtung (9) aufweist:
- mindestens ein Gyrometer mit Schwingungs-Aufbau vom MEMS-Typ,
- Eingangsports (21, 22, 23) zu der virtuellen Plattform (3) zur Durchführung der in geographischen Achsen (N, E, D) ausgedrückten Korrekturen der Inertialmessungen, wobei die Korrekturen in folgenden Termen bestehen:

- der Winkelbeschleunigung ($\vec{\rho}$), die durch den Port (23) eingeführt werden,
- der Winkelgeschwindigkeit ($\vec{\omega}$), die durch den Port (22) eingeführt werden, und
- der Linearbeschleunigung ($\vec{\gamma}$), die durch den Port (21) eingeführt werden,

- eine Subtraktionseinrichtung (14), die mit einem Sensor (8; 42) für die Lineargeschwindigkeit verbunden und dafür vorgesehen ist, eine in geographischen Achsen (N, E, D) ausgedrückte Differenz der Geschwindigkeit zu erzeugen,
indem der von der virtuellen Plattform (3) erzeugte Schätzwert der Lineargeschwindigkeit von einem Messwert der Geschwindigkeit des Luftfahrzeugs (1) abgezogen wird, der von dem Sensor (8; 42) stammt,
- eine Projektionseinrichtung (15) zur Erzeugung eines Schätzwertes der Kurvenflugrate durch Projektion des Messwertes der Winkelgeschwindigkeit auf eine vertikale Achse unter Verwendung eines Projektionsoperators, der aus den Lagewinkeln ($\theta$, $\varphi$) berechnet wird,
und
- eine Einrichtung (16) zur linearen Kombination, die so ausgebildet ist, dass jede der beiden horizontalen Komponenten der Korrekturen der Winkelbeschleunigung, der Winkelgeschwindigkeit und der Linearbeschleunigung eine lineare Kombination der beiden horizontalen Komponenten der Abweichung der Lineargeschwindigkeit ist, nämlich der Komponente, die parallel zur Korrektur ist, und der Komponente, die mit der Korrektur nicht kolinear ist, wobei die Koeffizienten der linearen Kombinationen kontinuierliche Punktionen der Zeit sind und vom Schätzwert der Kurvenflugrate abhängig sind.

**9.** Vorrichtung (9) nach Anspruch 8,
**dadurch gekennzeichnet, dass** sie das Verfahren nach einem der Ansprüche 1 bis 7 durchführt.

**10.** Vorrichtung (9) nach Anspruch 9,
**dadurch gekennzeichnet, dass** sie Teil einer Lagezentrale (2) eines Hilfsgerätes ist, wobei die Eingangs-Ports (21, 22, 23) für die Korrektur der virtuellen Plattform (3) einen Beitrag Null bezüglich der vertikalen Achse empfangen.

**11.** Vorrichtung (9) nach Anspruch 9,
**dadurch gekennzeichnet, dass** sie ferner mit einem Magnetometer, das am Luftfahrzeug (i) befestigt ist, sowie einem Sensor für die Höhe oder die Vertikalgeschwindigkeit verbunden ist, wobei diese Vorrichtung (9) Teil einer Lagezentrale (2) ist, die ein Messsystem für die beiden Lagewinkel und den Kurswinkel bildet, das ein Kursfilter und ein Vertikalfilter aufweist, wobei die Eingangs-Ports (21, 22, 23) für Korrekturen Vertikalterme am Eingang (23) zur Korrektur der Winkelbeschleunigung ($\vec{\rho}$) und am Eingang (22) zur Korrektur der Winkelgeschwindigkeit ($\vec{\omega}$) als Beitrag des Kursfilters sowie am Eingang (21) zur vertikalen Korrektur der Linearbeschleunigung ($\vec{\gamma}$) als Beitrag des Vertikalfilters empfangen.

**12.** Luftfahrzeug (1),
**dadurch gekennzeichnet, dass** bei ihm Schätzwerte angewandt werden, die nach dem Verfahren nach einem der Ansprüche 1 bis 7 erhalten werden.

**13.** Luftfahrzeug (1) nach Anspruch 12,
**dadurch gekennzeichnet, dass** es eine Lagezentrale (2) aufweist, zu der eine Vorrichtung (9) nach einem der Ansprüche 8 bis 11 gehört.

**14.** Luftfahrzeug (1) nach Anspruch 13,

**dadurch gekennzeichnet, dass** die Inertial-Messeinheit (6) mehrere Gyrometer mit Schwingungs-Aufbau vom MEMS-Typ aufweist.

Fig.1

Fig.2

Fig.3

Fig.4

Fig.5

Fig.6

Fig.7

Fig.8

## RÉFÉRENCES CITÉES DANS LA DESCRIPTION

**Documents brevets cités dans la description**

- FR 2614694
- FR 2898196
- FR 2840073